# EUROPEAN PATENT APPLICATION

(11) **EP 3 940 621 A2**
(43) Date of publication of application: **19.01.2022**
(21) Application number: 21210068.9
(22) Date of filing: 23.11.2021
(51) Int. Cl.: G06Q 30/02

(54) **METHOD FOR AUTOMATICALLY GENERATING ADVERTISEMENT, ELECTRONIC DEVICE, AND COMPUTER-READABLE STORAGE MEDIUM**

(30) Priority: 30.11.2020 CN 202011383385
(71) Applicant: BEIJING BAIDU NETCOM SCIENCE TECHNOLOGY CO., LTD., No.10 Shangdi 10th Street Haidian District Beijing 100085 (CN)
(72) Inventor: BIAN, Donghai, Beijing, 100085 (CN); ZHENG, Yehan, Beijing, 100085 (CN); PENG, Weihua, Beijing, 100085 (CN); LUO, Yu, Beijing, 100085 (CN)
(74) Representative: Isarpatent

(57) **Abstract**

Exemplary embodiments of the present disclosure provide a method and apparatus for automatically generating an advertisement, a device, a computer-readable storage medium, and a computer program product. The method (200) for automatically generating an advertisement includes: obtaining (210), by one or more computers (110), based on a field to which an object of the advertisement belongs, multimedia content reflecting attributes of the object, wherein the multimedia content comprises one of text content, image content, video content, and audio content; generating (220), by one or more computers (110), based on the field and the attributes, text information describing the object; and combining (230), by one or more computers (110), the multimedia content and the text information to generate the advertisement (130).

## Description

### Technical Field

Aspects of the present disclosure mainly relate to the information processing field, and more particularly to a method and apparatus for automatically generating an advertisement, a device, a computer-readable storage medium, and a computer program product.

### Background

With the development of mobile data networks, many changes have taken place in the form of advertising. As a way for a merchant to display a product thereof, advertising videos need to explain attributes of the product, which comprises related information such as the materials, the producing area, and the size, in as many details as possible. This involves writing advertising copies, selection of product images, and production of special effects, and the like. However, with the rapid increase in the number of advertisements, it is difficult for stereotyped advertisements to attract people's continuous attention when the audience is not clear, and manual production of advertising videos has high costs and is time-consuming. Therefore, there is a need for a solution for efficiently generating a high-quality advertisement.

### Summary

According to exemplary aspects of the present disclosure, a solution for automatically generating an advertisement is provided.

In a first aspect of the present disclosure, a method for automatically generating an advertisement is provided, the method comprising: obtaining, based on a field to which an object of the advertisement belongs, multimedia content reflecting an attributes of the object, wherein the multimedia content comprises one of text content, image content, video content, or audio content; generating, based on the field and the attributes, text information describing the object; and combining the multimedia content and the text information to generate the advertisement.

In a second aspect of the present disclosure, an apparatus for automatically generating an advertisement is provided, the apparatus comprising: a first multimedia content obtaining module configured to obtain, based on a field to which an object of the advertisement belongs, multimedia content reflecting attributes of the object, wherein the multimedia content comprises one of text content, image content, video content, or audio content; a first text information generation module configured to generate, based on the field and the attributes, text information describing the object; and an advertisement generation module configured to combine the multimedia content and the text information to generate the advertisement.

In a third aspect of the present disclosure, an electronic device is provided, comprising: one or more processors; and a storage apparatus configured to store one or more programs that, when executed by the one or more processors, cause the one or more processors to implement the method according to the first aspect of the present disclosure.

In a fourth aspect of the present disclosure, a computer-readable storage medium, having a computer program stored thereon, is provided, which when executed by a processor, performs the method according to the first aspect of the present disclosure.

In a fifth aspect of the present disclosure, a computer program product, comprising computer program instructions, is provided, which when executed by a processor, performs the method according to the first aspect of the present disclosure.

It should be understood that the content described in Summary is not intended to limit critical or important features of the embodiments of the present disclosure, nor is it intended to limit the scope of the present disclosure. Other features of the present disclosure will be easily comprehensible from the following description.

### Brief Description of the Drawings

The above and other features, advantages, and aspects of various embodiments of the present disclosure will become more apparent in conjunction with the drawings and with reference to the following detailed description. In the accompanying drawings, the same or similar reference numerals represent the same or similar elements.
FIG. 1 is a schematic diagram of an exemplary environment in which a plurality of embodiments of the present disclosure can be implemented;
FIG. 2 is a flowchart of an example of a process for automatically generating an advertisement according to some embodiments of the present disclosure;
FIG. 3 shows an example of a knowledge graph according to some embodiments of the present disclosure;
FIG. 4 is a flowchart of another example of a process for automatically generating an advertisement according to some embodiments of the present disclosure;
FIG. 5 is a schematic block diagram of an apparatus for automatically generating an advertisement according to an embodiment of the present disclosure; and
FIG. 6 is a block diagram of a computing device that can implement a plurality of embodiments of the present disclosure.

### Detailed Description

Aspects of the present disclosure will be described in more detail below with reference to the accompanying drawings. Although some embodiments of the present disclosure are shown in the accompanying drawings, it should be understood that the present disclosure can be implemented in various forms and should not be construed as being limited to the embodiments set forth herein. On the contrary, these embodiments are provided for a more thorough and complete understanding of the present disclosure. It should be understood that the accompanying drawings and the embodiments of the present disclosure are merely for purpose of illustration, and are not intended to limit the scope of protection of the present disclosure.

In the description of the embodiments of the present disclosure, the term "comprising" and similar terms should be understood as non-exclusive inclusion, that is, "including but not limited to". The term "based on" should be understood as "at least partially based on". The term "an embodiment" or "the embodiment" should be understood as "at least one embodiment". The terms "first", "second" and the like may refer to different or the same objects. Other explicit and implicit definitions may also be included below.

As mentioned above, in a traditional solution, when creating an advertisement, a user needs to manually search for materials associated with an object of the advertisement, write advertising copies, organize the found materials and copies, and create special effects to generate an advertisement video. Traditional advertisement creation requires manual acquisition of various types of advertisement materials and copies, and the materials are not multi-modal. In addition, this manner is too inefficient and costly when advertisements need to be generated in batches for different scenarios.

An exemplary embodiment of the present disclosure provides a solution for automatically generating an advertisement. In this solution, first, multimedia content for an object of the advertisement is obtained based on a field to which the advertisement relates. Then, text information describing the object is generated according to the field and attributes of the object. Finally, the multimedia content and the text information are combined to generate the advertisement. In this way, high-quality multimedia content and copies used to generate an advertisement can be automatically obtained to efficiently generate the advertisement.

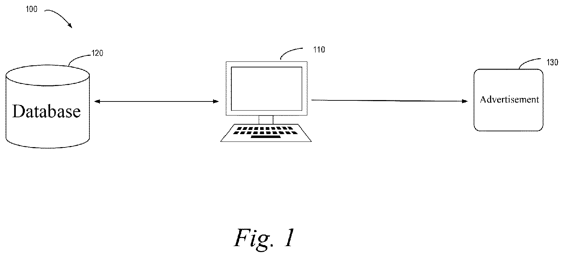

FIG. 1 is a schematic diagram of an exemplary environment 100 in which a plurality of embodiments of the present disclosure can be implemented. As shown in Fig. 1, the exemplary environment 100 comprises a computing device 110, a database 120, and an advertisement 130. The computing device 110 may be connected to the database 120. The database 120 may be any appropriate centralized or distributed database, including but not limited to a database based on a knowledge graph technology and a database based on searching.

In an embodiment, to generate the advertisement 130, the computing device 110 may obtain multimedia content, that is, materials, for the advertisement 130 from a knowledge graph stored in the database. The knowledge graph essentially intends to describe the objectively existing knowledge in the real world and a semantic network of an association relationship between the knowledge. Based on application fields of knowledge graphs, nowadays, the knowledge graphs are usually divided into general-purpose knowledge graphs and vertical knowledge graphs (also referred to as industry knowledge graphs). A general-purpose knowledge graph is not oriented to a specific field, and may be compared to structured encyclopedic knowledge. This type of knowledge graph contains a large amount of common-sense knowledge, and emphasizes the breadth of knowledge. A vertical knowledge graph is oriented to a specific field and constructed based on industry knowledge, and emphasizes the depth of knowledge. The knowledge graph herein may be a vertical knowledge graph such as an industry graph, an enterprise graph, or a product graph dedicated to advertising. Each node in the knowledge graph stores multi-modal data associated with the node. However, the knowledge graph herein may alternatively be a general-purpose knowledge graph, which is not limited in the present disclosure.

In an alternative embodiment, some data in the knowledge graphs in the database 130 is imperfect. An engine is used as an example. During initial construction of a knowledge graph, the concept of engine may include attributes such as fuel consumption, colors, volume, brands, and models. These attributes are common-sense knowledge and are well known to the public. Therefore, when the knowledge graph is initially constructed, these concepts related to the attributes of the engine may be added to the knowledge graph, and one concept is located at one node. An overall framework of the knowledge graph is preliminarily constructed. However, knowledge, such as specific fuel consumption, comprised colors, liters of volume, and comprised brands and models, is ever-changing and does not pertain to common-sense knowledge, and therefore cannot be given in details. These types of data need to be further collected. In addition, existing data in the knowledge graph may be unimodal, for example, in a text format, which cannot be used for video creation.

In the foregoing imperfect knowledge graph, the computing device 110 may obtain network-wide data from outside the database via a network to reconstruct the knowledge graph. The network may be any appropriate network, including but not limited to the Internet, a local area network (LAN), a metropolitan area network (MAN), a wide area network (WAN), a wired network such as an optical fiber network or a coaxial cable, and a wireless network such as Wi-Fi, a cellular telecommunication network, or Bluetooth.

The computing device 110 may be any appropriate centralized or distributed computing device, including but not limited to a personal computer, a server, a client, a handheld or laptop device, a multi-processor, a microprocessor, a set-top box, programmable consumer electronics, a networked PC, a minicomputer, a mainframe computer system, the distributed cloud, a combination thereof and the like.

The computing device 110 may further use the obtained multimedia content to synthesize the advertisement 130. A detailed process of generating the advertisement will be described below.

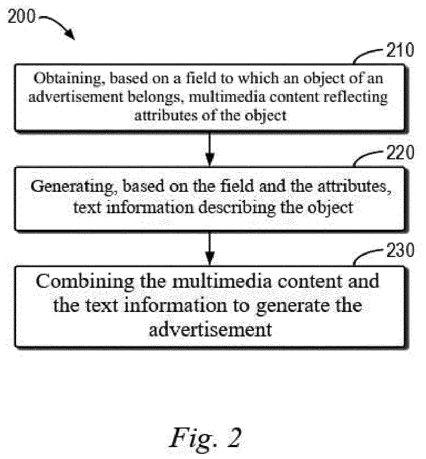

FIG. 2 is a flowchart of an example of a process 200 for automatically generating an advertisement according to some embodiments of the present disclosure. The process 200 may be implemented by the computing device 110.

In 210, the computing device 110 obtains, based on a field to which an object of the advertisement 130 belongs, multimedia content reflecting attributes of the object, wherein the multimedia content comprises one of text content, image content, video content, and audio content. For example, the computing device 110 determines the object for which the advertisement 130 is to be generated, and then determines advertising materials based on a field to which the object belongs.

The computing device 110 may divide the field of advertising into three levels: industry, company, and product. There are different forms of advertising for different fields, which are particularly divided into the following several types: (1) industry: advertisements thereof focus on introducing basic information about the industry, well-known enterprises in this industry, industry prospects, and the like. (2) company: company introductions, related financial reports, product features, personnel scales, and the like are included. (3) product: specific products, comprising tangible and intangible products, are mainly introduced. By determining the field to which the advertisement 130 relates, the computing device 110 may obtain more targeted materials reflecting the attributes of the object of the advertisement 130 in a knowledge graph of the related field.

In an example, after the computing device 110 determines the field, the computing device 110 may determine one or more target nodes in a knowledge graph that match the field, wherein the nodes in the knowledge graph are associated with data in a plurality of predetermined data formats. Then, the computing device 110 may obtain, as the multimedia content, target data associated with the one or more target nodes.

For example, if the computing device 110 determines that the object of the advertisement 130 is an automobile, it determines that the field to which the object belongs is the product field.

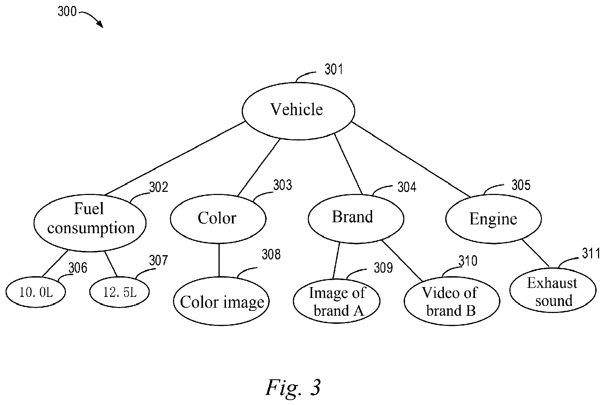

FIG. 3 is used as an example, in which the computing device 110 determines that a target node matching an automotive field is a vehicle 301. The computing device 110 may further determine, with reference to the vehicle node 301, a fuel consumption node 302, a color node 303, a brand node 304, and an engine node 305 that are associated with the vehicle node, and then may obtain multimedia content associated with the foregoing nodes, such as text content associated with fuel consumption (10.0 L 306), image content associated with a color (an image 308 of automobile colors), video content associated with a brand (a video 310 of automobile brand B), and audio content associated with an engine (exhausting sound 311).

In an embodiment, the computing device 110 may determine a type of the multimedia content based on the foregoing field, and obtain the multimedia content for the type. For example, for the foregoing product field, text content, image content, video content, and audio content that introduce a product need to be obtained. Then, corresponding multimedia content is determined in associated nodes in a knowledge graph 300 based on a required type.

The case, where there exists the constructed knowledge graph 300, is illustrated the above. When there does not exist a constructed knowledge graph, in an embodiment, the computing device 110 obtains structured data of an advertising entity via a network, and then puts the structured data into an advertisement graph based on a requirement of the advertisement graph to construct a related knowledge graph.

In an alternative embodiment, the computing device 110 may obtain a knowledge graph from the database 120 and an external network to construct an advertisement graph, for example, by obtaining a general-purpose knowledge graph to construct a vertical knowledge graph (the advertisement graph). In a construction process, the computing device 110 first obtains information such as a related industry graph, enterprise graph, and product graph based on information such as an advertising field and an advertising theme; and then establishes an edge association for the foregoing information based on a superordinate-subordinate relationship, and crawls information for an absent field, for example, information such as a product image, to construct a multi-modal knowledge graph.

In some embodiments, the computing device 110 may further filter the obtained multimedia content. For example, the computing device 110 may remove multimedia content related to a website in a blacklist, remove multimedia content containing a sensitive keyword, remove multimedia content related to political and military topics, and the like through a related tag or title, or the like in materials, or remove multimedia content coinciding with that in the knowledge graph in the database 120. This is merely exemplary, and useless low-quality multimedia content may also be filtered by using other technical means.

In 220, the computing device 110 generates, based on the field and the attributes, text information describing the object. After obtaining the multimedia content used to generate the advertisement, the computing device 110 determines the text information describing the object of the advertisement 130, that is, plans an advertising copy. The planning of the advertising copy is a core part of advertisement generation, and a high-quality advertising copy needs to fully reflect the characteristics of an advertisement.

The computing device 110 may first determine, based on the determined object and field, whether there is a pre-constructed high-quality advertising copy template in the database 120, and when determining that there is a pre-constructed high-quality advertising copy template in the database, may fill in the advertising copy template with the text content obtained in 210 to generate an advertising copy.

When there is no high-quality advertising copy template, in an embodiment, the computing device 110 obtains comment information of a reference object belonging to the same filed to which the object belongs; then, obtains an attention degree of the comment information, wherein the attention degree indicates a quantity of at least one of views, clicks, likes, comments, or reposts that are associated with the comment information; subsequently, selects, from the comment information, candidate comment information with an attention degree exceeding a first predetermined threshold; and finally, generates the text information based on the selected candidate comment information.

The computing device 110 may obtain related message and comment information of a product or company associated with the foregoing determined field and object from various APP websites and question-answer websites based on a template mining method, and mine a high-quality template from the comment information. The automobile advertisement is still used as an example. The computing device 110 may obtain an automobile-related post that is relatively frequently viewed or a comment with a high like rate from an automotive APP or forum, and then obtain text information therein as candidate comment information. The computing device 110 may further generate an advertising copy based on the candidate comment information.

The computing device 110 obtains a feature used to represent a language structure of the candidate comment information, and generates text information based on text content in multimedia content and the feature. For example, the computing device 110 may obtain a grammatical structure of excellent candidate comment information through semantic analysis, and then combine the text content obtained in 210 and the grammatical structure to generate the text information, that is, the advertising copy, describing the object of the advertisement 130.

In an alternative embodiment, the computing device 110 may generate, by using a neural network model, the text information describing the object of the advertisement 130. The computing device 110 may first obtain the model. The computing device 110 may obtain historical text information for a historical advertisement, determine a structure of the historical text information, and train the model by using the historical text information and the structure, to obtain the model.

For example, the computing device 110 may obtain a training set for training the model, mine related entities, attributes, and types for historically published advertising copy, determine structured data corresponding to the copy, and obtain a high-quality manually written copy. The computing device 110 then may train the model, for example, by using a pre-training model based on ERINE-GEN. On the basis of this, the input is changed from original text to: text and corresponding structured data. Then, the model is fine-tuned to obtain a model that can output a copy.

Then, the computing device 110 generates the text information based on the attributes of the object of the advertisement 130 by using the foregoing model. For example, the computing device 110 may automatically generate an advertising copy based on the foregoing model and a given input field, for example, the text content obtained in 210.

In an embodiment, the quality of the advertising copy generated based on the foregoing model is not necessarily high. In this case, the computing device 110 may further filter a high-quality copy therein by using an additional advertising copy discrimination model. In the advertising copy discrimination model, a used high-quality manual copy (positive example) + randomly selected user comment data + scrambled manual copy sentences (negative example) may be used as a training set. The advertising copy discrimination model is also obtained by using the pre-training model based on ERINE-GEN.

The advertising copy generation model and the advertising copy discrimination model may be pre-stored in the database 120, or may be generated by the computing device 110, which is not limited in the present disclosure.

In 230, the computing device 110 combines the multimedia content and the text information to generate the advertisement. Different templates need to be applied for different fields and objects of the advertisement 130 and different types of multimedia data obtained in 210, to ensure diversity of advertisements that are finally generated.

For example, if the computing device 110 determines that the advertisement 130 aims at a single object, it selects a template which is based on entity-attribute value. This type of template focuses on how to better represent related attributes, such as a size, materials, and smell, of the object of the advertisement 130 selected by a user. When the computing device 110 determines that the advertisement 130 aims at a plurality of objects, such as a plurality of different products of the same automobile brand, it selects a template which is based on entity-entity. This type of template is frequently used in a situation with a plurality of entities, and focuses on highlighting a contrast and connection between these entities. The computing device 110 may alternatively select another type of template, which is not limited in the present disclosure.

The computing device 110 combines, by using the foregoing template, the multimedia content obtained in 210 and the copy obtained in 220 to generate an advertisement. The advertisement may be a text advertisement, an image advertisement, a video advertisement, or a audio advertisement, which is not limited in the present disclosure.

In an embodiment, after obtaining the related multimedia content and determining the copy and the template, the computing device 110 sends these parameters to a corresponding distributed video rendering platform through the background to generate a video offline, and then obtains a final rendered video through a callback interface after, for example, 20 to 50 seconds.

In this way, high-quality multimedia content and copies used to generate an advertisement can be automatically obtained to efficiently generate the advertisement.

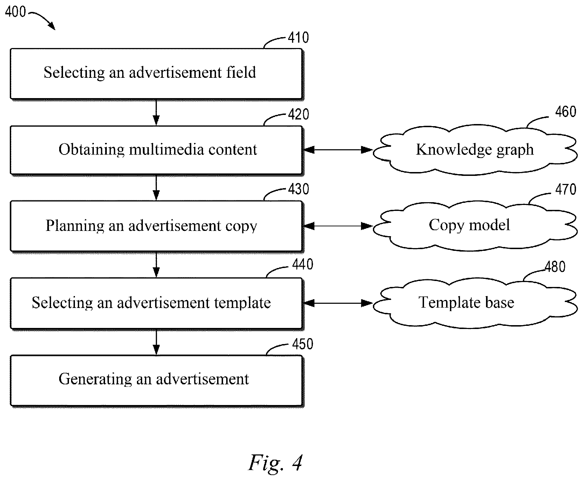

FIG. 4 is a flowchart of another example of a process for automatically generating an advertisement according to some embodiments of the present disclosure. The process 400 may be implemented by the computing device 110. In 410, the computing device 110 determines a field of an advertisement 130 based on an object of the advertisement 130, and the computing device 110 may also receive a field that is input by a user. In 420, the computing device 110 obtains multimedia content from a knowledge graph 460 based on the foregoing field. In 430, the computing device 110 plans an advertising copy based on a copy model 470. In 440, the computing device 110 selects an advertisement template from a template base 480. Finally, in 450, the computing device 110 automatically synthesizes an advertisement based on the foregoing multimedia content, the advertising copy, and the advertisement template. For the particular implementations of each of step 410 to step 450, please refer to the description in FIG. 2, and details are not described herein again.

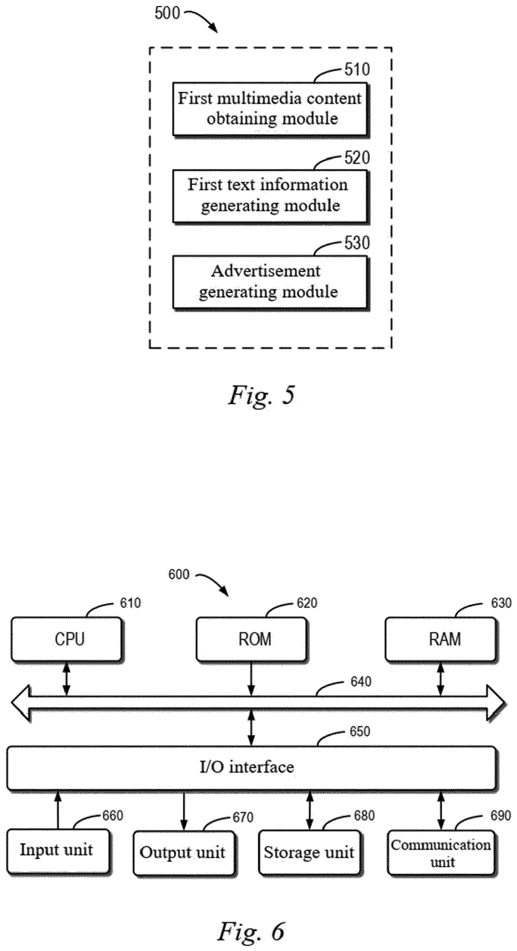

FIG. 5 is a schematic block diagram of an apparatus 500 for automatically generating an advertisement according to an embodiment of the present disclosure. As shown in FIG. 5, the apparatus 500 comprises: a first multimedia content obtaining module 510 configured to obtain, based on a field to which an object of the advertisement belongs, multimedia content reflecting attributes of the object, wherein the multimedia content comprises one of text content, image content, video content, and audio content; a first text information generation module 520 configured to generate, based on the field and the attributes, text information describing the object; and an advertisement generation module 530 configured to combine the multimedia content and the text information to generate the advertisement.

In some embodiments, the first multimedia content obtaining module 510 may comprise: a target node determination module configured to determine one or more target nodes in a knowledge graph that match the field, wherein the nodes in the knowledge graph are associated with data in a plurality of predetermined data formats; and a second multimedia content obtaining module configured to obtain, as the multimedia content, target data associated with the one or more target nodes.

In some embodiments, the first text information generation module 520 may comprise: a comment information obtaining module configured to obtain comment information of a reference object belonging to the same field to which the object belongs; an attention degree obtaining module configured to obtain an attention degree of the comment information, wherein the attention degree indicates a quantity of at least one of views, clicks, likes, comments, or reposts that are associated with the comment information; a comment information selection module configured to select, from the comment information, candidate comment information with an attention degree exceeding a first predetermined threshold; and a second text information generation module configured to generate the text information based on the selected candidate comment information.

In some embodiments, the second text information generation module may comprise: a feature obtaining module configured to obtain a feature used to represent a language structure of the candidate comment information; and a third text information generation module configured to generate the text information based on the text content in the multimedia content and the feature.

In some embodiments, the first text information generation module 520 may comprise: a first model obtaining module configured to obtain a model, wherein the model is configured to generate the text information based on the attributes; and a fourth text information generation module configured to generate the text information based on the attributes by using the model.

In some embodiments, the model obtaining module may comprise: a historical text information obtaining module configured to obtain historical text information for a historical advertisement; a structure determination module configured to determine a structure of the historical text information; and a second model obtaining module configured to train the model by using the historical text information and the structure, to obtain the model.

In some embodiments, the first multimedia content obtaining module comprises: a type determination module configured to determine a type of the multimedia content based on the field; and a third multimedia content obtaining module configured to obtain the multimedia content for the type.

In some embodiments, the field comprises one of an industry field, a company field, and a product field.

FIG. 6 is a schematic block diagram of an exemplary device 600 that may be configured to implement an embodiment of the present disclosure. The device 600 may be configured to implement the computing device 110 in FIG. 1. As shown in FIG. 6, the device 600 comprises a central processing unit (CPU) 610, which may perform various appropriate actions and processing according to computer program instructions stored in a read-only memory (ROM) 620 or computer program instructions loaded from a storage unit 680 to a random access memory (RAM) 630. The RAM 630 may be further used to store various programs and data required for the operations of the device 600. The CPU 610, the ROM 620, and the RAM 630 are connected to each other through a bus 640. An input/output (I/O) interface 650 is also connected to the bus 640.

A plurality of components in the device 600 are connected to the I/O interface 650, including: an input unit 660, such as a keyboard or a mouse; an output unit 670, such as various types of displays or speakers; a storage unit 680, such as a magnetic disk or an optical disc; and a communication unit 690, such as a network interface card, a modem, or a wireless communication transceiver. The communication unit 690 allows the device 600 to exchange information/data with other devices through a computer network such as the Internet and/or various telecommunications networks.

The processing unit 610 performs the various methods and processing described above, such as the process 200 and/or the process 300. For example, in some embodiments, the process 200 and/or the process 300 may be implemented as computer software programs, which are tangibly contained in a machine-readable medium, such as the storage unit 680. In some embodiments, a part or all of the computer programs may be loaded and/or installed onto the device 600 via the ROM 620 and/or the communication unit 690. When the computer program is loaded into the RAM 630 and executed by the CPU 610, one or more steps of the process 200 and/or process 300 described above may be performed. Alternatively, in another embodiment, the CPU 610 may be configured, by any other suitable means (for example, by means of firmware), to perform the process 200 and/or the process 300.

The functions described herein above may be performed at least partially by one or more hardware logic components. For example, without limitation, exemplary types of hardware logic components that may be used comprise: a field programmable gate array (FPGA), an application-specific integrated circuit (ASIC), an application-specific standard product (ASSP), a system-on-chip (SOC) system, a complex programmable logic device (CPLD), and the like.

Program codes used to implement the method of the present disclosure can be written in any combination of one or more programming languages. These program codes may be provided to a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In addition, although the operations are described in a particular order, it should be understood as requiring these operations to be performed in the shown particular order or in a sequential order, or requiring all the illustrated operations to be performed to achieve a desired result. Under certain circumstances, multitasking and parallel processing may be advantageous. Similarly, although several specific implementation details are comprised in the foregoing discussions, these details should not be construed as limiting the scope of the present disclosure. Some features described in the context of separate embodiments may alternatively be implemented in combination in a single embodiment. In contrast, various features described in the context of a single implementation may alternatively be implemented in a plurality of implementations individually or in any suitable subcombination.

Although the subject matter has been described in languages particular to structural features and/or logical actions of the method, it should be understood that the subject matter defined in the appended claims is not necessarily limited to the specific features or actions described above. On the contrary, the particular features and actions described above are merely examples for implementing the claims.

## Claims

1. A computer-implemented method (200) for generating an advertisement comprising:
obtaining (210), by one or more computers (110), based on a field to which an object of the advertisement belongs, multimedia content reflecting attributes of the object, wherein the multimedia content comprises one of text content, image content, video content, and audio content;
generating (220), by one or more computers (110), based on the field and the attributes, text information describing the object; and
combining (230), by one or more computers (110), the multimedia content and the text information to generate the advertisement (130).

2. The method according to claim 1, wherein obtaining multimedia content reflecting attributes of the object comprises:
determining one or more target nodes (301), in a knowledge graph, that match the field, wherein nodes in the knowledge graph are associated with data in a plurality of predetermined data formats; and
obtaining, as the multimedia content, target data (306, 307, 308, 309, 310, 311) associated with the one or more target nodes, or
obtaining the multimedia content comprises:
determining a type of the multimedia content based on the field; and
obtaining the multimedia content for the type.

3. The method according to claim 1, wherein generating, based on the field and the attributes, text information describing the object comprises:
obtaining comment information of a reference object belonging to a same field to which the object belongs;
obtaining an attention degree of the comment information, wherein the attention degree indicates a quantity of at least one of: views, clicks, likes, comments, or reposts that are associated with the comment information;
selecting, from the comment information, candidate comment information with an attention degree exceeding a first predetermined threshold; and
generating the text information based on the selected candidate comment information; or
generating the text information comprises:
obtaining a model configured to generate the text information based on the attributes; and
generating the text information based on the attributes by using the model.

4. The method according to claim 3, wherein generating the text information based on the selected candidate comment information comprises:
obtaining a feature representing a language structure of the candidate comment information; and
generating the text information based on the text content in the multimedia content and the feature.

5. The method according to claim 3, wherein obtaining a model comprises:
obtaining historical text information for a historical advertisement;
determining a structure of the historical text information; and
training the model by using the historical text information and the structure, to obtain the model.

6. The method according to claim 1, wherein field comprises one of an industry field, a company field, or a product field.

7. A device (500) for generating an advertisement comprising:
a first multimedia content obtaining module (510), configured to obtain, based on a field to which an object of the advertisement belongs, multimedia content reflecting attributes of the object, wherein the multimedia content comprises one of text content, image content, video content, and audio content;
a first text information generating module (520), configured to generate, based on the field and the attributes, text information describing the object; and
advertisement generating module (530), configured to combine, by one or more computers, the multimedia content and the text information to generate the advertisement.

8. The device according to claim 7, wherein the first multimedia content obtaining module (510) comprises:
target node determining module, configured to determine one or more target nodes, in a knowledge graph, that match the field, wherein nodes in the knowledge graph are associated with data in a plurality of predetermined data formats; and
a second multimedia content obtaining module, configured to obtain, as the multimedia content, target data associated with the one or more target nodes; or
the first multimedia content obtaining module (510) comprises:
type determining module, configured to determine a type of the multimedia content based on the field; and
a third multimedia content obtaining module, configured to obtain the multimedia content for the type.

9. The device according to claim 7, wherein the first text information generating module (520) comprises:
comment information obtaining module, configured to obtain comment information of a reference object belonging to a same field to which the object belongs;
attention degree obtaining module, configured to obtain an attention degree of the comment information, wherein the attention degree indicates a quantity of at least one of: views, clicks, likes, comments, or reposts that are associated with the comment information;
comment information selecting module, configured to select from the comment information, candidate comment information with an attention degree exceeding a first predetermined threshold; and
a second text information generating module, configured to generate the text information based on the selected candidate comment information; or
the first text information generating module (520) comprises:
a first model obtaining module, configured to obtain a model configured to generate the text information based on the attributes; and
a fourth text information generating module, configured to generate the text information based on the attributes by using the model.

10. The device according to claim 9, wherein the second text information generating module comprises:
a feature obtaining module, configured to obtain a feature representing a language structure of the candidate comment information; and
a third text information generating module, configured to generate the text information based on the text content in the multimedia content and the feature.

11. The device according to claim 9, wherein the first model obtaining module comprises:
historical text information obtaining module, configured to obtain historical text information for a historical advertisement;
structure determining module, configured to determine a structure of the historical text information; and
a second model obtaining module, configured to train the model by using the historical text information and the structure, to obtain the model.

12. The device according to claim 7, wherein field comprises one of an industry field, a company field, or a product field.

13. A computer program product, comprising a computer program configured to be executed by one or more processors of an electronic device, the one or more programs including instructions for performing the method of any of claims 1-6.

14. An electronic device (600), comprising:
one or more processors (610); and
a storage apparatus (620, 630) configured to store one or more programs that, when executed by the one or more processors, cause the one or more processors to implement the method according to any one of claims 1 to 6.

15. A computer-readable storage medium, having a computer program stored thereon, wherein when the program is executed by a processor, the method according to any one of claims 1 to 6 is implemented.
